# EUROPÄISCHE PATENTSCHRIFT

(11) **EP 2 220 627 B1**
(45) Veröffentlichungstag und Bekanntmachung des Hinweises auf die Patenterteilung: **08.08.2012**
(21) Anmeldenummer: 08804457.3
(22) Anmeldetag: 19.09.2008
(51) Int. Cl.: G08B 21/04, G08B 13/196, G08B 21/06, G06K 9/00, H04N 7/18

(54) **ÜBERWACHUNGSSYSTEM MIT ZUSTANDSERFASSUNGSMODUL, VERFAHREN ZUR SELBSTÜBERWACHUNG EINES BEOBACHTERS SOWIE COMPUTERPROGRAMM**
MONITORING SYSTEM HAVING STATUS DETECTION MODULE, METHOD FOR SELF-MONITORING OF AN OBSERVER AND COMPUTER PROGRAM
SYSTÈME DE SURVEILLANCE AVEC MODULE DE DÉTECTION D'ÉTAT, PROCÉDÉ D'AUTOSURVEILLANCE D'UN OBSERVATEUR, ET PROGRAMME INFORMATIQUE

(30) Priorität: 16.11.2007 DE 102007054819
(43) Veröffentlichungstag der Anmeldung: 25.08.2010
(73) Patentinhaber: Robert Bosch GmbH, 70442 Stuttgart (DE)
(72) Erfinder: NIEM, Wolfgang, 31141 Hildesheim (DE); LOOS, Hartmut, 31141 Hildesheim (DE)
(86) Internationale Anmeldenummer: PCT/EP2008/062523
(87) Internationale Veröffentlichungsnummer: WO 2009/062775

(56) Entgegenhaltungen:
- DE-A1- 19 642 830
- US-A- 5 867 587
- US-A- 6 070 098

## Beschreibung

### Stand der Technik

Die Erfindung betrifft ein Überwachungssystem zur Überwachung einer Mehrzahl von Überwachungsbereichen, wobei das Überwachungssystem von mindestens einem menschlichen Beobachter kontrollierbar ist und/oder kontrolliert wird.

Überwachungssysteme umfassen üblicherweise eine Mehrzahl von Überwachungskameras, welche örtlich verteilt zur Beobachtung von einem oder mehreren Überwachungsbereichen angeordnet sind. Derartige Überwachungssysteme werden beispielsweise zur Überwachung von Plätzen, Kreuzungen, Gebäuden, Bibliotheken, Bahnhöfen, Fabriken, Gefängnissen, Altersheimen, etc. verwendet.

Bei einem üblichen Aufbau derartiger Überwachungssysteme werden die Überwachungssignale der Überwachungskameras in einer Überwachungszentrale zusammengeführt und dort entweder automatisch mittels geeigneter Überwachungsalgorithmen oder durch Überwachungspersonal kontrolliert. Der Vorteil der automatisierten Überwachung liegt in der gleichbleibenden Überwachungsqualität und in den geringen Personalkosten. Der Vorteil des Einsatzes von Überwachungspersonal ist dagegen in der menschlichen Komponente des Überwachungspersonals zu sehen, der Fähigkeit verdächtiges Verhalten von Personen in dem Überwachungsbereich auch bei Fällen zu erkennen, welche nicht durch Überwachungsalgorithmen abgedeckt sind. Ein Beispiel für ein übliches Videoüberwachungssystem ist in der EP 0 714 586 B1 offenbart.

Die Druckschrift DE 196 42 830 betrifft ein Verfahren und Vorrichtung zur Unterbindung des Einschlafens und der Reaktionskontrolle von Personen, wie Fahrzeug- oder Schiffsführer, Wach-, Bedien- und Aufsichtspersonal und/oder der medizinischen Kontrolle und Überwachung Süchtiger oder mit Medikamenten behandelter Personen, wobei die Reaktionskontrolle durch die Positionsverlagerung und/oder Größenveränderung des menschlichen Auges gesteuert wird.

Die Druckschrift US 6,070,098 betrifft ebenfalls ein Verfahren und eine Vorrichtung zur Alarmgenerierung beim Auftreten von Sekundenschlaf bei Personen. Es werden eine Vielzahl von Eingangskanälen als Grundlage zur Detektion des Sekundenschlafes vorgestellt.

Die Druckschrift US 5,867,587, die wohl den nächstkommenden Stand der Technik bildet, betrifft auch ein System und eine Vorrichtung zur Detektion und Wamhinweisgenerierung bei beeinträchtigten Bedienern von Maschinen oder auch Flugverkehr-Kontrolleuren. Das System beruht auf der Auswertung der Augenbewegung der beobachteten Person.

### Offenbarung der Erfindung

Erfindungsgemäß wird ein Überwachungssystem zur Überwachung einer Mehrzahl von Überwachungsbereichen mit den Merkmalen des Anspruchs 1, ein Verfahren zur Selbstüberwachung eines Beobachters mit den Merkmalen des Anspruchs 15 sowie ein Computerprogramm mit den Merkmalen des Anspruchs 16 vorgeschlagen. Vorteilhafte oder bevorzugte Ausführungsformen der Erfindung ergeben sich aus den Unteransprüchen, der nachfolgenden Beschreibung und den beigefügten Figuren.

Das Überwachungssystem umfasst vorzugsweise mehrere Überwachungssensoren, welche insbesondere als Überwachungskameras, alternativ oder ergänzend als Mikrofone, Lichtschrankensysteme, Kontaktschalter, Scanner etc. ausgebildet sein können. Die mit dem Überwachungssystem zu überwachenden Überwachungsbereiche sind als räumliche Überwachungsbereiche, zum Beispiel als Räume, Gänge, Plätze, Kreuzungen, etc. ausgebildet. Bevorzugt ist das Überwachungssystem und/oder die Überwachungsbereiche und/oder mindestens ein Überwachungsbereich stationär angeordnet. Das Überwachungssystem ist zur Kontrolle durch Überwachungspersonal ausgebildet, wobei das Überwachungssystem von mindestens einem menschlichen Beobachter, insbesondere einem Wachmann, kontrollierbar ist und/oder im Betrieb kontrolliert wird.

Der Erfindung folgend wird vorgeschlagen, ein Zustandserfassungsmodul in dem Überwachungssystem zu integrieren, welches ausgebildet und/oder angeordnet ist, auf Basis von optisch erfassten und/oder erfassbaren Zustandssignalen, die von dem Beobachter ausgehen oder ausgesendet werden, den Überwachungszustand des Beobachters zu ermitteln. Es wird somit vorgeschlagen, auf Basis eines optischen Sensors den Überwachungszustand - technisch gesagt den Betriebszustand - des Beobachters während der Kontrolle des Überwachungssystems zu ermitteln. Das Zustandserfassungsmodul bildet damit eine Selbstüberwachung des Überwachungssystems unter Einbindung des menschlichen Beobachters.

Die Ermittlung oder Bestimmung des Überwachungszustands des Beobachters kann zur Verbesserung oder Stabilisierung der Überwachungsqualität deutlich beitragen: Zum Ersten ist es möglich, den Überwachungszustand des Beobachters zu protokollieren, um zu einem späteren Zeitpunkt Überwachungslücken oder ähnliche Überwachungssonderzustände nachvollziehen bzw. auswerten zu können. Zum Zweiten ist es möglich, dass der Überwachungszustand als eine Ist-Größe in einem Steuerkreis verwendet wird und auf Basis der Ist-Größe eine Stellgröße erzeugt wird. Zum Dritten erlaubt die Erfindung, dass der Überwachungszustand des Beobachters in einem Regelkreis als eine Ist-Größe verwendet wird und auf Basis der Ist-Größe einen Stellwert bzw. eine Stellgröße ermittelt wird. Zum Vierten gestattet die Erfindung die Umsetzung einer Mensch-Maschinen-Schnittstelle, wobei der Überwachungszustand des Beobachters als Eingabegröße zur Steuerung des Überwachungssystems nutzbar ist. Diese allgemeinen Erfindungsgedanken werden durch die Unteransprüche und/oder die nachfolgende Beschreibung sowie die beigefügten Ausführungsbeispielen konkretisiert.

Bei einer besonders bevorzugten Ausführungsform der Erfindung umfasst der Überwachungszustand einen Ermüdungsgrad und/oder eine Aufmerksamkeits- bzw. Blickrichtung des Beobachters. Der Ermüdungsgrad ist ein wichtiger Indikator für die Überwachungsqualität der Überwachungstätigkeit des Beobachters. Grob gesagt ist es wichtig, zu erkennen, ob der Beobachter eingeschlafen ist. Aber auch Zwischenstufen des Ermüdungsgrads stellen wertvolle Informationen dar, da beispielsweise kurzfristige Unaufmerksamkeiten, wie zum Beispiel Sekundenschlaf, etc. ermittelt werden können. Die Aufmerksamkeitsrichtung, insbesondere die Blickrichtung des Beobachters, gibt wertvolle Hinweise auf den Überwachungszustand des Beobachters, indem festgestellt wird, ob der Beobachter an das Überwachungssystem angeschlossene Monitore, etc. kontrolliert, oder, ob der Beobachter temporär abgelenkt ist, wie zum Beispiel in den Situationen "Schauen aus dem Fenster", "Lesen einer Zeitung", etc..

Bei einer bevorzugten Ausprägung der Erfindung werden die Zustandssignale von dem Beobachter unbewusst und/oder unkontrolliert und/oder passiv erzeugt. Derartige Zustandssignale sind zum Beispiel ein Gähnen, ein Blinzeln oder allgemeiner Lidschlagverhalten, Augenbrauenbewegung, Kopfhaltung, Kopfposen, Augenöffnungswinkel, Gesichtsmuskelverzerrungen, Grinsen, etc. Derartige Zustandssignale können von dem Zustandserfassungsmodul einzeln oder in Zusammenschau ausgewertet werden und daraus der Überwachungszustand des Beobachters abgeleitet werden.

Bei einer bevorzugten Ausführungsform der Erfindung sind die Zustandssignale als insbesondere optische Gesichtssignale ausgebildet, also als Signale, welche durch das Gesicht und/oder den Kopf bzw. in dem Gesichts- und/oder Kopfbereich des Beobachters erzeugt werden. Hierzu zählen insbesondere Gesichtsorientierung, -position, Mimik, Augenöffnungswinkel, Blickrichtung, Mundöffnungswinkel, Mundform, Okulomotorik etc.

Bei einer konstruktiven Realisierung der Erfindung weist das Überwachungssystem und/oder das Zustandserfassungsmodul eine Mensch-Maschinen-Schnittstelle - nachfolgend MMS genannt - zur Aufnahme der Zustandssignale des Beobachters auf sowie eine Auswertevorrichtung, welche die Bewertung der aufgenommenen Zustandssignale übernimmt und den Überwachungszustand des Beobachters ermittelt.

Die MMS kann als ein beliebiger optischer Sensor ausgebildet sein, bevorzugt ist diese jedoch als eine Kamera verkörpert, die zur Aufnahme des Beobachters ausgebildet und/oder angeordnet ist. Bei einer bevorzugten Weiterbildung des Systems ist die Kamera als eine Monokamera oder Stereokamera ausgebildet, welche den Beobachter frontal oder im Wesentlichen frontal von vorne aufnimmt. Von dieser Perspektive sind die Zustandssignale des Beobachters am Besten optisch erfassbar. Bei einer optionalen Weiterbildung der Erfindung umfasst das Überwachungssystem eine Überwachungszentrale, in der die Informationen der Überwachungsbereiche bzw. der Überwachungskameras zusammengeführt sind und welche einen Arbeitsplatz für den Beobachter zur Kontrolle der Überwachungsbereiche aufweist, wobei die Kamera zur insbesondere frontalen Aufnahme des Beobachters auf dem Arbeitsplatz ausgebildet ist.

In einer möglichen Konkretisierung der Erfindung weist das Überwachungssystem ein Wammodul auf, welches in Abhängigkeit des Überwachungszustands zur Ausgabe eines Warnsignals ausgebildet ist. Bevorzugt schließt das Überwachungssystem und/oder das Zustandserfassungsmodul eine Ausgabevorrichtung ein, welche die Ausgabe eines optischen, akustischen und/oder haptischen Signals z. B. an den Beobachter ermöglicht, und welche durch das Warnmodul bei Überschreitung von Grenzbedingungen, insbesondere eines Grenzwertes für den Ermüdungsgrad, angesteuert wird.

Bei einer optionalen Weiterbildung der Erfindung umfasst das Überwachungssystem ein Hinweismodul, welches auf Basis einer vorgegebenen Überwachungsstrategie zur Ausgabe von Hinweisen an den Beobachter ausgebildet ist. Optional ist das Hinweismodul zur Kontrolle der Befolgung der Hinweise über eine Auswertung des Überwachungszustands, insbesondere der Aufmerksamkeitsrichtung und/oder Blickwinkelrichtung des Beobachters, ausgebildet. Die Überwachungsstrategie kann statisch vorgegeben, dynamisch generiert werden, und/oder ereignisgesteuert sein. Bei einer statischen Vorgabe erzeugt das Hinweismodul Hinweise, so dass der Beobachter beispielsweise alle Überwachungsbereiche gleich oft kontrolliert. Bei einer dynamisch erzeugten Kontrollverteilung wird die Überwachungsstrategie beispielsweise in Abhängigkeit von detektierten Aktivitäten in den Überwachungsbereichen bestimmt. Bei einer ereignisgesteuerten Kontrollverteilung wird der Beobachter beispielsweise auf einen Überwachungsbereich hingewiesen, in dem ein Ereignis automatisiert detektiert wurde. Es ist optional auch möglich, dass die Überwachungsstrategie über die Vergabe von Prioritäten eingerichtet ist. Die Überprüfung der Befolgung der Hinweise wird durch eine Auswertung des Überwachungszustands des Beobachters kontrolliert. Für den Fall, dass der Beobachter den Hinweisen und/oder der Überwachungsstrategie nicht folgt, können Gegenmaßnahmen, wie z.B. Wiederholung der Hinweise, Ausgabe einer Nachricht an eine Kontrollinstanz, wie z.B. einen Vorgesetzten, erfolgen.

Bei einer weiteren optionalen Ergänzung der Erfindung umfasst das Überwachungssystem ein Trainingsmodul, welches den Überwachungszustand registriert und insbesondere statistisch auswertet, wobei Trainingshinweise zur Verbesserung der Überwachungsqualität erzeugt werden. Beispielsweise wird durch das Trainingsmodul statistisch ausgewertet, welche Überwachungsbereiche sehr oft und welche Überwachungsbereiche sehr wenig überwacht werden und ein diesbezüglicher Trainingshinweise in Form einer Nachricht an den Beobachter bereitgestellt. Durch das Trainingsmodul kann die Überwachungstätigkeit des Beobachters gesteuert einem gewünschten Optimum angenähert werden, wobei die Fortschritte des Beobachters nachvollziehbar aufgezeichnet werden.

Bei einer optionalen Weiterbildung der Erfindung weist das Überwachungssystem ein Protokollmodul auf, welches zur Abspeicherung des Überwachungszustands bzw. es zeitlichen Verlaufs des Überwachungszustands zusammen mit dem Signalstrom des Überwachungssystems ausgebildet ist. Insbesondere werden die Ermüdungs- und/oder Blickrichtungsparameter in einem Metadatenstrom gemeinsam mit den Signaldaten der Überwachungsbereiche, insbesondere den Videodaten der Überwachungsbereiche aufgenommen. Der Vorteil des Protokollmoduls liegt vor allem darin, dass durch Protokollierung der Blickrichtung bzw. des Ermüdungszustands des Beobachters im Nachhinein nachvollzogen werden kann, was der Beobachter tatsächlich gesehen hat bzw. hat sehen können. Es ist auch möglich die Ergebnisse des Trainingsmoduls und/oder des Hinweismoduls und/oder weitere Daten für eine Qualitätssicherung der Überwachung zu speichern.

Bei einer möglichen Erweiterung der Erfindung zeigt das Überwachungssystem ein Auswahlmodul, welches auf Basis des Überwachungszustands des Beobachters ein von dem Beobachter fixiertes Überwachungsziel identifiziert und/oder auswählt. Bei dieser Ausführungsform wird somit neben der Ermittlung des Überwachungszustands des Beobachters das aktuelle Überwachungsziel des Beobachters bestimmt. Das Überwachungsziel ist bevorzugt als ein Überwachungsmonitor und/oder ein Überwachungsmonitorabschnitt eines Überwachungsmonitors, auf dem mehrere Überwachungsbereiche dargestellt sind, und/oder als ein Überwachungsobjekt in einem der Überwachungsbereiche ausgebildet. Diese Überwachungszielinformationen können von dem Protokollmodul mitprotokolliert werden.

Auf Basis der Überwachungszielinformationen ist es durch ein optionales Steuerungsmodul möglich, dass das ausgewählte Überwachungsobjekt durch Aktivierung und/oder Betätigung von Überwachungssensoren in dem Überwachungsbereich nachverfolgt wird. Beispielsweise können die Überwachungssensoren als bewegbare, insbesondere PTZ (Pan-Tilt-Zoom-Kameras) ausgebildet sein, die dem ausgewählten Überwachungsobjekt durch Steuerung von dem Steuerungsmodul automatisch folgen und/oder automatisch aktiviert werden. Damit wird durch die Kombination des Auswahlmoduls und des Steuerungsmoduls eine intuitive Mensch-Maschinen-Schnittstelle gebildet, die eine Objektverfolgung ohne manuelle Betätigung des Überwachungssystems ermöglicht.

Bei einer optionalen Ergänzung der Erfindung wird das ausgewählte Überwachungsobjekt mittels digitaler Bildverarbeitung verfolgt, wobei vorzugsweise das verfolgte Überwachungsobjekt in dem aktuellen Überwachungsbereich und/oder in nachfolgenden Überwachungsbereichen bei der Anzeige für den Beobachter markiert wird. Bei einer möglichen Ausführungsform wird das oder die ausgewählten Überwachungsobjekte gespeichert und beim späteren Wiedererscheinen in dem gleichen oder in anderen Überwachungsbereichen speziell markiert und/oder eine entsprechende Information an den Beobachter ausgegeben.

Bei einer nächsten Weiterbildung der Erfindung weist das Überwachungssystem ein Informationsmodul auf, welches zur Ausgabe von Zusatzinformationen über das ausgewählte Überwachungsobjekt ausgebildet ist. Die Zusatzinformationen können beispielsweise vergangene Bewegungsmuster, Interaktion mit anderen Objekten, früher ausgelöste Ereignisse, eine Gesichtserkennung, eine Objektklassifizierung, etc. umfassen. Auf diese Weise erhält der Beobachter "auf einen Blick" sämtliche verfügbare Informationen zu dem ausgewählten Überwachungsobjekt.

Bei einer bevorzugten Konkretisierung umfasst das Überwachungssystem somit eine kamerabasierte Erfassungseinheit, die den Ermüdungszustand und die Blickrichtung eines Beobachters erfasst, der eine Videowand oder einen Monitor überwacht. Die erfassten Daten können sowohl direkt in Hinweise für den Beobachter umgesetzt werden und/oder gemeinsam mit den Videodaten aufgezeichnet werden. Wesentliche Vorteile der Vorrichtung sind vor allem eine verbesserte Überwachungsqualität, die aus der rechtzeitigen Erkennung von Übermüdung und einer besser gelenkten Aufmerksamkeit des Beobachters resultiert, der Möglichkeit zur intuitiven Steuerung von bewegbaren Kameras und der verbesserten Nachvollziehbarkeit von Überwachungssituationen bei einer späteren Auswertung.

Ein weiterer Gegenstand der Erfindung betrifft ein Verfahren zur Selbstüberwachung eines Beobachters mit den Merkmalen des Anspruchs 15, wobei der Beobachter mehrere Überwachungsbereiche mit einem Überwachungssystem, vorzugsweise wie es zuvor beschrieben wurde und/oder nach einem der vorhergehenden Ansprüche, kontrolliert, wobei optische Zustandssignale des Beobachters aufgenommen werden und auf Basis der Zustandssignale der Überwachungszustand des Beobachters ermittelt wird. Insbesondere ist das Verfahren zur bestimmungsgemäßen Bedienung des zuvor beschriebenen Überwachungssystems ausgebildet.

Ein weiterer Gegenstand betrifft ein Computerprogramm mit den Merkmalen des Anspruchs 16.

### Kurze Beschreibung der Zeichnungen

Weitere Merkmale, Vorteile und Wirkungen ergeben sich aus der nachfolgenden Beschreibung eines bevorzugten Ausführungsbeispiels der Erfindung. Dabei zeigen:
Figur 1 einen prinzipiellen Systemaufbau eines Überwachungssystems mit Zustandserfassungsmodul als ein erstes Ausführungsbeispiel der Erfindung;
Figur 2 ein Blockschaltdiagramm zur Illustration der Funktionsweise der Vorrichtung in Figur 1;
Figur 3 ein schematisches Flussdiagramm zur Illustration eines möglichen Ablaufs des erfindungsgemäßen Verfahrens.

### Ausführungsform(en) der Erfindung

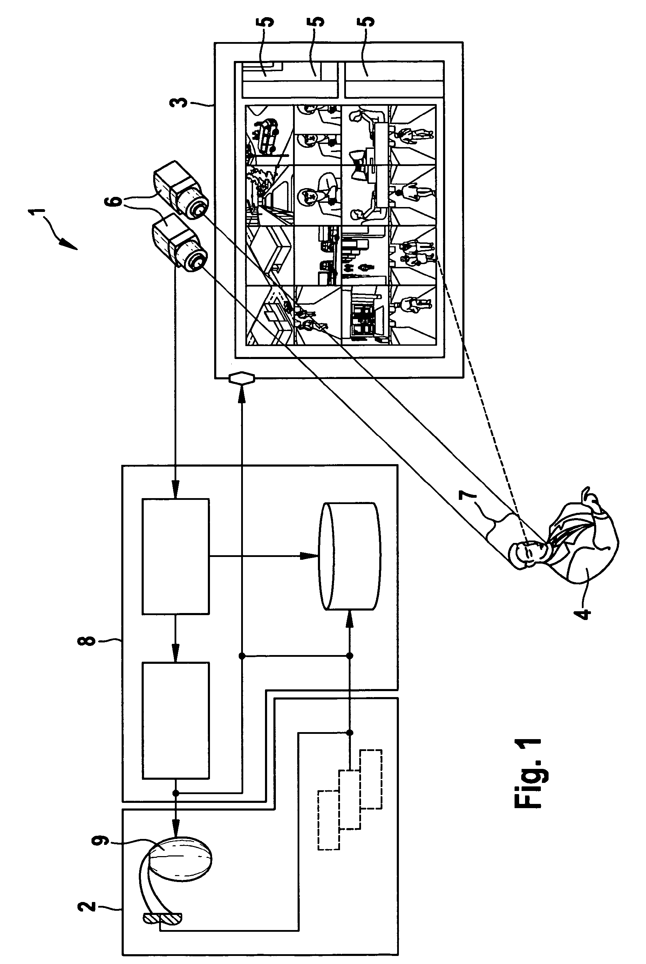

Die Figur 1 zeigt ein Überwachungssystem 1, welches eine Mehrzahl von Überwachungskameras 2 aufweist, die auf relevante Überwachungsbereiche zum Beispiel in einem Gebäude, einer Fabrik, einem Straßenzug, etc. gerichtet sind.

Die Bilddatenströme der Überwachungskameras 2 werden - optional unter Zwischenschaltung von digitalen Bildverarbeitungsalgorithmen - auf einen oder mehrere Monitore 3 geleitet und auf diesen dargestellt. Ein Beobachter 4 hat einen Arbeitsplatz, welcher ihm erlaubt, die auf dem Monitor 3 dargestellten Überwachungsbereiche 5 zu kontrollieren. Bei ungewöhnlichen oder bemerkenswerten Ereignissen in den Überwachungsbereichen 5 werden von dem Beobachter 4 Gegen- oder Warnmaßnahmen ergriffen.

Zur Selbstüberwachung des Beobachters 4 weist das Überwachungssystem 1 eine Mono- oder eine Stereokamera 6 auf, welche auf den Beobachter 4 bzw. auf dessen Arbeitsplatz gerichtet ist, so dass dessen Gesicht 7 im Erfassungsbereich der Kamera 6 liegt, wenn der Beobachter 4 den Monitor 3 bzw. die Überwachungsszenen 5 kontrolliert.

Die von der Kamera 6 aufgenommenen Bilddatenströme werden auf ein Zustandsüberwachungsmodul 8 gegeben, welches dazu ausgebildet ist, den Ermüdungszustand des Beobachters 4 und/oder dessen Blickrichtung, bzw. - allgemeiner formuliert - dessen Überwachungszustand auf Basis der durch die Kamera 6 aufgenommenen, optischen Zustandssignale des Beobachters 4 zu ermitteln. Wie es in der Figur 1 angedeutet ist, wird der ermittelte Überwachungszustand des Beobachters 4 gemeinsam mit den Videodatenströmen der Überwachungskamera 2 in Form eines Metadatenstroms gespeichert, so dass auch zu einem späteren Zeitpunkt ermittelbar ist, in welchem Überwachungszustand der Beobachter 4 sich zu bestimmten Überwachungszeiten befunden hat. Alternativ oder ergänzend wird die Blickrichtung des Beobachters 4 dahingehend ausgewertet, dass ein von dem Beobachter 4 fixiertes Überwachungsobjekt in den Überwachungsbereichen identifiziert wird und eine steuerbare PTZ-Kamera 9 (Pan-Tilt-Zoom-Kamera) so von dem Zustandserfassungsmodul 8 angesteuert wird, dass diese automatisiert dem identifizierten Überwachungsobjekt folgt.

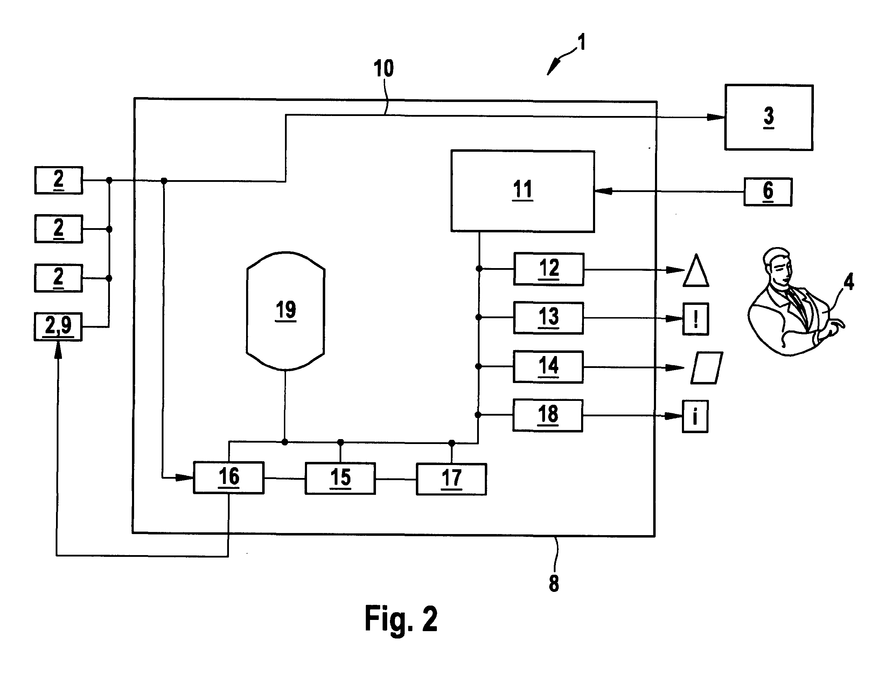

Die Figur 2 zeigt ein Blockschaltbild des Überwachungssystems 1 mit optionalen Ergänzungen, um dessen Funktionsweise besser darstellen zu können. Das Überwachungssystem 1 ist mit der Mehrzahl von Überwachungskameras 2, 9 verbunden, deren Bilddatenströme über einen Pfad 10 zu einem bzw. mehreren Monitoren 3 zum Zwecke der Darstellung geleitet werden. Vor den Monitoren 3 ist in der Figur 2 wieder schematisch der Beobachter 4 eingezeichnet, der die Monitore 3 und damit die dargestellten Überwachungsbereiche 5 kontrolliert und der über die Kamera 6 selbstüberwacht wird.

Die über die Kamera 6 aufgenommenen, optischen Zustandssignale des Beobachters 4 werden an eine Auswerteeinrichtung 11 übergeben, welche den Überwachungszustand des Beobachters 4, insbesondere einen Ermüdungsgrad und/oder eine Aufmerksamkeits- bzw. Blickrichtung des Beobachters 4 bestimmt. Der Ermüdungsgrad des Beobachters 4 wird beispielsweise durch eine kamerabasierte Lidschlagauswertung erfasst. Die Blickrichtungserkennung kann beispielsweise durch eine Detektion und/oder Lokalisierung des Kopfes und/oder der Augen des Beobachters 4 und/oder einer modellbasierten Berechnung der Kopfpose und/oder der Blickrichtung erfolgen.

In einem mit der Auswerteeinrichtung 11 informationstechnisch verbundenen Warnmodul 12 wird insbesondere der Ermüdungsgrad des Beobachters 4 mit vorgegebenen Grenzwerten verglichen und bei Überschreitung von Grenzbedingungen ein Warnsignal an den Beobachter 4 ausgegeben.

Des Weiteren weist das Überwachungssystem 1 ein Hinweismodul 13 auf, welches dem Beobachter 4 Hinweise im laufenden Betrieb gibt, welchen Monitorbereich oder welche Monitore 3 der Beobachter 4 zu kontrollieren hat. Auf diese Weise ist es möglich, im Rahmen einer Überwachungsstrategie an Monitore 3 oder Monitorbereiche höhere und niedrigere Priorität zu vergeben, so dass in Abhängigkeit der Prioritäten die Monitore 3 oder Monitorbereiche häufiger bzw. seltener kontrolliert werden. Alternativ kann die Aufinerksamkeit des Beobachters 4 durch das Hinweismodul 13 auf einen Monitor 3 bzw. -bereich gelenkt werden, in dem ein Überwachungsbereich dargestellt ist, in dem durch ein automatisiertes Verfahren ein Ereignis detektiert wurde. Vorzugsweise ist das Hinweismodul 13 so ausgebildet, dass es anhand der ermittelten Blickrichtung des Beobachters 4 überprüft, ob die Hinweise befolgt wurden, also ob der Beobachter 4 einen durch Hinweise benannten Monitorbereich oder Monitor 3 tatsächlich kontrolliert hat.

Als weiteres optionales Modul weist das Überwachungssystem 1 ein Trainingsmodul 14 auf, welches den Überwachungszustand des Beobachters 4 über die Zeit beobachtet und bewertet. Auf Basis der Langzeitanalyse der Überwachungstätigkeit des Beobachters 4 werden insbesondere generelle Verbesserungsvorschläge für den Beobachter 4 erarbeitet und ausgegeben. Derartige Verbesserungsvorschläge können insbesondere die Verbesserung der Überwachungsstrategie betreffen, so kann der Beobachter 4 z.B. darauf hingewiesen werden, wenn er bestimmte Monitore 3 bzw. - bereiche vernachlässigt.

In einem Auswahlmodul 15 wird anhand der ermittelten Blickrichtung festgestellt, welchen Monitor 3 bzw. -bereich und/oder welches Überwachungsobjekt von dem Beobachter 4 fixiert, also intensiv oder aufmerksam beobachtet wird. Das fixierte Überwachungsobjekt wird als ausgewähltes Überwachungsobjekt abgespeichert und kann in den nachfolgenden Modulen informationstechnisch weiter verarbeitet werden.

Eine mögliche Weiterverarbeitung eines ausgewählten Überwachungsobjekts erfolgt beispielsweise in einem Steuerungsmodul 16, welches zur Ansteuerung der bewegbaren Überwachungskamera 9 ausgebildet ist. Die Überwachungskamera 9 bzw. -kameras werden von dem Steuerungsmodul 16 dabei so angesteuert, dass das ausgewählte Überwachungsobjekt mit der Überwachungskamera 9 nachverfolgt wird, zum Beispiel derart, dass sich das ausgewählte Überwachungsobjekt stets im Zentrum des Erfassungsbereichs der Überwachungskamera 9 befindet und/oder mit einer vordefinierten Größe auf dem Monitor 3 angezeigt wird.

Neben der tatsächlichen, visuellen Verfolgung des ausgewählten Überwachungsobjekts ist es möglich, dieses in einem Verfolgungsmodul 17 digital zu verfolgen. Diese digitale Verfolgung wird bevorzugt über digitale Bildverarbeitung umgesetzt und verwendet bekannte Algorithmen des Objekt-Trackings. Durch die digitale Verfolgung ist es möglich, die Bewegungslinie des ausgewählten Überwachungsobjektes in den Überwachungsbereichen zu ermitteln und/oder anzuzeigen, das ausgewählte Überwachungsobjekt auf dem Monitor 3 speziell zu markieren, über mehrere Überwachungsbereiche hinweg, insbesondere markiert, zu verfolgen oder Interaktionen mit anderen Objekten zu ermitteln.

Als weitere Ergänzung ist ein Informationsmodul 18 vorgesehen, welches zu dem ausgewählten Überwachungsobjekt weitere Informationen ausgibt, die beispielsweise ebenfalls auf dem Monitor 3 dargestellt werden können. Bei den zusätzlichen Informationen kann es sich um Objektklassifikationen, Informationen aus vergangenen Überwachungen etc. handeln.

Die Bilddatenströme der Überwachungskameras 2, 9 können in einem Datenspeicher 19 mit einer beliebigen Auswahl der in den Modulen 11 bis 17 erzeugten Daten, insbesondere zeitsynchronisiert abgespeichert werden, um zu einem späteren Zeitpunkt die Überwachungstätigkeit des Beobachters 4 nachvollziehen zu können.

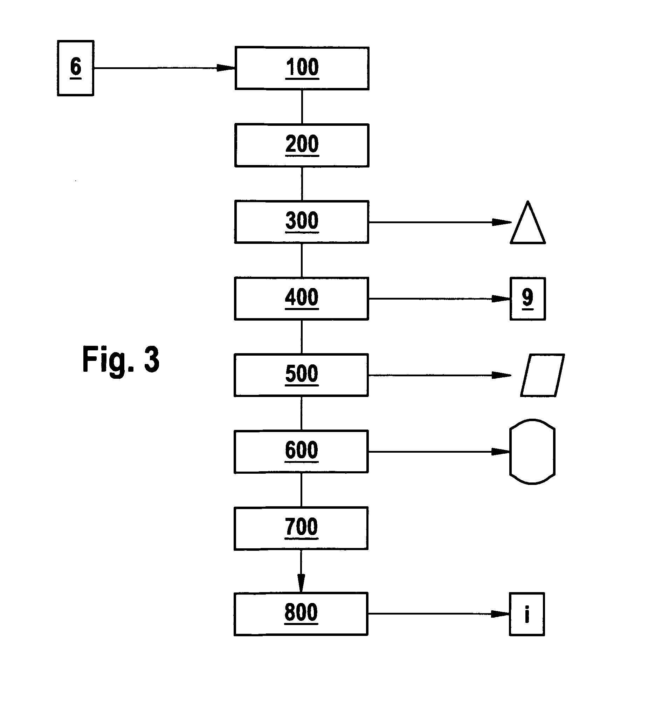

Die Figur 3 zeigt in einer schematischen Darstellung ein Flussdiagramm zur Illustration des erfindungsgemäßen Verfahrens in Form eines Ausführungsbeispiels, wobei das Verfahren z.B. auf dem Überwachungssystem der Figur 2 ausgeführt wird.

In einem ersten Schritt 100 wird der Beobachter 4 mittels der Kamera 6 mit Frontalansicht aufgenommen. In einem zweiten Schritt 200 wird der Ermüdungszustand des Beobachters 4 und dessen Blickrichtung aus den Videoaufnahmen der Kamera 6 ermittelt, wobei vorzugsweise eine Detektion und Lokalisierung des Kopfes des Beobachters, eine Detektion und Lokalisierung der Augen des Beobachters, eine modellbasierte Berechnung der Kopfpose und der Blickrichtung des Beobachters und eine Detektion und Auswertung von Lidschlägen des Beobachters erfolgt. In einem dritten Schritt 300 wird bei Überschreitung eines Ermüdungsgrads oder einer Abweichung des IST-Verhaltens gegenüber einem SOLL-Verhalten hinsichtlich des

Überwachungszustands des Beobachters 4 eine Warnung oder ein Hinweis an den Beobachter 4 oder an eine andere Instanz ausgegeben. In einem vierten Schritt 400 wird durch Auswertung der Blickrichtung der beobachtete Monitor 3 bzw. ein Überwachungsobjekt ausgewählt und gegebenenfalls die bewegbare Überwachungskamera 9 angesteuert. In einem fünften Schritt 500 werden über eine Langzeitauswertung des Überwachungszustands des Beobachters Hinweise zur Verbesserung der Beobachtungsstrategie erzeugt. Bei einem sechsten Schritt 600 werden die Ermüdungs- und/oder Blickrichtungsparameter im Metadatenstrom gemeinsam mit den Videodaten in dem Datenspeicher 19 abgespeichert. In einem siebten Schritt 700 werden bei der Darstellung auf dem Monitor 3 früher ausgewählte Überwachungsobjekte bei einem Auftauchen in anderen Überwachungsbereichen oder bei anderen Überwachungskameras 2 speziell markiert. In einem achten Schritt 800 werden zu fixierten Überwachungsobjekten Informationen gesucht und angezeigt.

## Patentansprüche

1. Überwachungssystem (1) zur Überwachung einer Mehrzahl von Überwachungsbereichen (5), wobei das Überwachungssystem (1) von mindestens einem menschlichen Beobachter (4) kontrollierbar ist und/oder kontrolliert wird,
mit einem Zustandserfassungsmodul (8), welches ausgebildet und/oder angeordnet ist, um auf Basis von optisch erfassten Zustandssignalen des Beobachters (4) den Überwachungszustand des Beobachters (4) zu ermitteln,
**gekennzeichnet durch** ein Auswahlmodul (15), welches zur Identifikation eines Überwachungsmonitors (3) und/oder eines in dem Überwachungsbereich (5) angeordneten Überwachungsobjekts als ausgewähltes Überwachungsobjekt auf Basis des Überwachungszustands ausgebildet ist.

2. Überwachungssystem (1) nach Anspruch 1, **dadurch gekennzeichnet, dass** der Überwachungszustand einen Ermüdungsgrad und/oder eine Aufmerksamkeits- bzw. Blickrichtung des Beobachters umfasst.

3. Überwachungssystem (1) nach einem der vorhergehenden Ansprüche 1 oder 2, **dadurch gekennzeichnet, dass** die Zustandssignale als von dem Beobachter (4) unbewusst und/oder unkontrolliert und/oder passiv erzeugte Signale ausgebildet sind.

4. Überwachungssystem (1) nach einem der vorhergehenden Ansprüche, **dadurch gekennzeichnet, dass** die Zustandssignale als Gesichts- und/oder Kopfsignale ausgebildet sind.

5. Überwachungssystem (1) nach einem der vorhergehenden Ansprüche, **gekennzeichnet durch** eine Mensch-Maschinen-Schnittstelle (MMS, 6) zur Aufnahme der Zustandssignale des Beobachters (4) und mit einer Auswertevorrichtung (11) zur Bewertung der aufgenommenen Zustandssignale, wobei als Ergebnis der Bewertung der Überwachungszustand des Beobachters (4) ermittelt wird.

6. Überwachungssystem (1) nach Anspruch 5, **dadurch gekennzeichnet, dass** die Mensch-Maschinen-Schnittstelle (MMS) als eine Kamera (6) ausgebildet ist, die zur Aufnahme des Beobachters (4) ausgebildet und/oder angeordnet ist.

7. Überwachungssystem (1) nach einem der vorhergehenden Ansprüche, **gekennzeichnet durch** ein Warnmodul (12), welches zur Ausgabe eines Warnsignals in Abhängigkeit des Überwachungszustands ausgebildet ist.

8. Überwachungssystem (1) nach einem der vorhergehenden Ansprüche, **gekennzeichnet durch** ein Hinweismodul (13), welches ausgebildet ist, den Beobachter (4) bei der Umsetzung einer vorgegebenen und/oder vorgebbaren Überwachungsstrategie durch Hinweise zu steuern und die Befolgung der Hinweise über eine Auswertung des Überwachungszustands zu kontrollieren.

9. Überwachungssystem (1) nach einem der vorhergehenden Ansprüche, **gekennzeichnet durch** ein Trainingsmodul (14), welches den Überwachungszustand auswertet und Trainingshinweise zur Verbesserung der Überwachungsqualität erzeugt.

10. Überwachungssystem (1) nach einem der vorhergehenden Ansprüche, **gekennzeichnet durch** ein Protokollmodul (18), welches zur Abspeicherung des Überwachungszustands zusammen mit dem Signalstrom des Überwachungssystems (1) ausgebildet ist.

11. Überwachungssystem (1) nach einem der vorhergehenden Ansprüche **gekennzeichnet durch** ein Steuerungsmodul (16), welches zur Verfolgung des ausgewählten Überwachungsobjekts **durch** Auswahl und/oder Betätigung und/oder Steuerung von Überwachungssensoren (9) in den Überwachungsbereichen (5) ausgebildet ist.

12. Überwachungssystem (1) nach einem der vorhergehenden Ansprüche, **gekennzeichnet durch** ein Verfolgungsmodul (17), welches zur Markierung und/oder Verfolgung des ausgewählten Überwachungsobjekts mittels digitaler Bildverarbeitung ausgebildet ist.

13. Überwachungssystem (1) nach einem der vorhergehenden Ansprüche, **gekennzeichnet durch** ein Informationsmodul (18), welches zur Ausgabe von Zusatzinformationen über das ausgewählte Überwachungsobjekt ausgebildet ist.

14. Verfahren zur Selbstüberwachung eines Beobachters, der mehrere Überwachungsbereiche mit einem Überwachungssystem kontrolliert, **dadurch gekennzeichnet, dass** optische Zustandssignale des Beobachters aufgenommen werden und auf Basis der Zustandssignale der Überwachungszustand des Beobachters ermittelt wird und dass durch ein Auswahlmodul (15) ein Überwachungsmonitor (3) und/oder ein in dem Überwachungsbereich (5) angeordnetes Überwachungsobjekt als ausgewähltes Überwachungsobjekt auf Basis des Überwachungszustands identifiziert wird.

15. Computer-Programm mit Programm-Code Mitteln, um alle Schritte des Verfahrens nach Anspruch 14 durchzuführen, wenn das Programm auf einem Computer oder dem Überwachungssystem (1) nach einem der Ansprüche 1 bis 13 durchgeführt wird.

## Claims

1. Monitoring system (1) for monitoring a plurality of monitoring regions (5), the monitoring system (1) being controllable and/or controlled by at least one human observer (4),
having a state capturing module (8) which is designed and/or arranged in order to determine the monitoring state of the observer (4) on the basis of optically captured state signals of the observer (4), **characterized by** a selection module (15) which is designed to identify a monitoring unit (3) and/or a monitoring object arranged in the monitoring region (5) as selected monitoring object on the basis of the monitoring state.

2. Monitoring system (1) according to Claim 1, **characterized in that** the monitoring state comprises a fatigue level and/or an alertness direction or viewing direction of the observer.

3. Monitoring system (1) according to either of the preceding Claims 1 and 2, **characterized in that** the state signals are designed as signals which are produced by the observer (4) unconsciously and/or in an uncontrolled fashion and/or passively.

4. Monitoring system (1) according to one of the preceding claims, **characterized in that** the state signals are designed as face signals and/or head signals.

5. Monitoring system (1) according to one of the preceding claims, **characterized by** a man-machine interface (MMS, 6) for recording the state signals of the observer (4), and having an evaluation device (11) for evaluating the recorded state signals, the monitoring state of the observer (4) being determined as result of the evaluation.

6. Monitoring system (1) according to Claim 5, **characterized in that** the man-machine interface (MMS) is designed as a camera (6) which is designed and/or arranged to record the observer (4).

7. Monitoring system (1) according to one of the preceding claims, **characterized by** a warning module (12) which is designed to output a warning signal as a function of the monitoring state.

8. Monitoring system (1) according to one of the preceding claims, **characterized by** an instruction module (13) which is designed to control the observer (4) in implementing a prescribed and/or prescribable monitoring strategy by providing instructions, and to control compliance with the instructions via an evaluation of the monitoring state.

9. Monitoring system (1) according to one of the preceding claims, **characterized by** a training module (14) which evaluates the monitoring state and produces training instructions for improving the monitoring quality.

10. Monitoring system (1) according to one of the preceding claims, **characterized by** a protocol module (18) which is designed to store the monitoring state together with the signal current of the monitoring system (1).

11. Monitoring system (1) according to one of the preceding claims, **characterized by** a control module (16) which is designed to track the selected monitoring object by selection and/or actuation and/or control of monitoring sensors (9) in the monitoring regions (5).

12. Monitoring system (1) according to one of the preceding claims, **characterized by** a tracking module (17) which is designed to mark and/or track the selected monitoring object by means of digital image processing.

13. Monitoring system (1) according to one of the preceding claims, **characterized by** an information module (18) which is designed to output additional information relating to the selected monitoring object.

14. Method for self-monitoring of an observer who controls a plurality of monitoring regions with the aid of a monitoring system, **characterized in that** optical state signals of the observer are recorded and the monitoring state of the observer is determined on the basis of the state signals, and **in that** a selection module (15) is used to identify a monitoring unit (3) and/or a monitoring object arranged in the monitoring region (5) as selected monitoring object on the basis of the monitoring state.

15. Computer program having program code means in order to carry out all the steps of the method according to Claim 14 when the program is carried out on a computer or the monitoring system (1) according to one of Claims 1 to 13.

## Revendications

1. Système de surveillance (1) destiné à surveiller plusieurs zones de surveillance (5), le système de surveillance (1) pouvant être contrôlé et/ou étant contrôlé par au moins un observateur humain (4), le système comprenant :
un module (8) de détection d'état configuré et/ou disposé pour déterminer l'état de surveillance de l'observateur (4) sur la base de signaux d'état de l'observateur (4) saisis optiquement,
**caractérisé par**
un module de sélection (15) qui est configuré pour identifier un moniteur de surveillance (3) et/ou un objet de surveillance disposé dans la zone de surveillance (5) comme objet de surveillance sélectionné sur la base de l'état de surveillance.

2. Système de surveillance (1) selon la revendication 1, **caractérisé en ce que** l'état de surveillance comporte un degré de fatigue et/ou la direction de l'attention ou du regard de l'observateur.

3. Système de surveillance (1) selon l'une des revendications 1 ou 2 qui précèdent, **caractérisé en ce que** les signaux d'état sont configurés comme signaux inconscients, incontrôlés et/ou produits passivement par l'observateur (4).

4. Système de surveillance (1) selon l'une des revendications précédentes, **caractérisé en ce que** les signaux d'état sont configurés sous la forme de signaux de visage et/ou de tête.

5. Système de surveillance (1) selon l'une des revendications précédentes, **caractérisé par** une interface homme-machine (MMS, 6) qui enregistre les signaux d'état de l'observateur (4) et par un dispositif d'évaluation (11) qui évalue les signaux d'état enregistrés, l'état de surveillance de l'observateur (4) étant déterminé en tant que résultat de l'évaluation.

6. Système de surveillance (1) selon la revendication 5, **caractérisé en ce que** l'interface homme-machine (MMS) est configuré comme caméra (6) configurée et/ou disposée pour enregistrer l'observateur (4).

7. Système de surveillance (1) selon l'une des revendications précédentes, **caractérisé par** un module d'avertissement (12) configuré pour émettre un signal d'avertissement en fonction de l'état de surveillance.

8. Système de surveillance (1) selon l'une des revendications précédentes, **caractérisé par** un module indicateur (13) configuré pour commander l'observateur (4) par des indications du passage à une stratégie de surveillance prédéterminée et/ou pré-déterminable et pour contrôler par l'intermédiaire d'une évaluation de l'état de surveillance si ces indications sont bien suivies.

9. Système de surveillance (1) selon l'une des revendications précédentes, **caractérisé par** un module d'apprentissage (14) qui évalue l'état de surveillance et qui délivre des indications d'apprentissage pour améliorer la qualité de la surveillance.

10. Système de surveillance (1) selon l'une des revendications précédentes, **caractérisé par** un module de protocole (18) configuré pour conserver en mémoire l'état de surveillance en même temps que le flux de signaux du système de surveillance (1).

11. Système de surveillance (1) selon l'une des revendications précédentes, **caractérisé par** un module de commande (16) configuré pour suivre l'objet de surveillance sélectionné, par sélection et/ou actionnement et/ou commande de détecteurs de surveillance (9) placés dans les zones de surveillance (5).

12. Système de surveillance (1) selon l'une des revendications précédentes, **caractérisé par** un module de suivi (17) configuré pour repérer et/ou suivre l'objet de surveillance sélectionné au moyen d'un traitement numérique d'images.

13. Système de surveillance (1) selon l'une des revendications précédentes, **caractérisé par** un module d'informations (18) configuré pour délivrer des informations supplémentaires concernant l'objet de surveillance sélectionné.

14. Procédé d'auto-surveillance d'un observateur qui contrôle plusieurs zones de surveillance à l'aide d'un système de surveillance, **caractérisé en ce que** des signaux optiques d'état de l'observateur sont enregistrés, **en ce que** l'état de surveillance de l'observateur est déterminé sur la base des signaux d'état et **en ce qu'**un moniteur de surveillance (3) et/ou un objet de surveillance disposé dans la zone de surveillance (5) est identifié en tant qu'objet de surveillance sélectionné par un module de sélection (15) sur la base de l'état de surveillance.

15. Programme informatique doté de moyens de code de programme qui permettent d'exécuter toutes les étapes du procédé selon la revendication 14 lorsque le programme est exécuté sur un ordinateur ou sur un système de surveillance (1) selon l'une des revendications 1 à 13.
